(19) **Europäisches Patentamt / European Patent Office / Office européen des brevets**

(11) **EP 2 236 663 A1**

(12) **EUROPEAN PATENT APPLICATION**
published in accordance with Art. 153(4) EPC

(43) Date of publication:
**06.10.2010 Bulletin 2010/40**

(21) Application number: **08854574.4**

(22) Date of filing: **26.09.2008**

(51) Int Cl.:
*D07B 1/06* (2006.01)          *B60C 9/00* (2006.01)
*B60C 15/06* (2006.01)

(86) International application number:
**PCT/JP2008/067425**

(87) International publication number:
**WO 2009/069373 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.11.2007 JP 2007306157**

(71) Applicant: **Sumitomo Rubber Industries, Ltd.**
**Kobe-shi, Hyogo 651-0072 (JP)**

(72) Inventor: **MIYAZAKI, Shinichi**
**Kobe-shi**
**Hyogo 651-0072 (JP)**

(74) Representative: **Manitz, Finsterwald & Partner GbR**
**Martin-Greif-Strasse 1**
**80336 München (DE)**

(54) **STEEL CORD FOR TIRE AND PNEUMATIC TIRE EMPLOYING IT**

(57)      It is an object of the present invention to reduce fretting between strands in a steel cord, to suppress reduction in cord strength caused by running, to enhance rubber penetrability, and to improve tire durability. The steel cord includes a cord main portion 19 of a triple layer-stranding structure including: a core 16 formed from one core strand f1, an inner sheath 17 including N (2 to 5) inner sheath strands f2 stranded with a stranding pitch Pi around the core; and outer sheath 18 formed from M (6 to 11) outer sheath strands f3 stranded with a stranding pitch Po around the inner sheath. Diameters of the strands f1, f2 and f3 are equal to each other, and stranding directions of the sheaths 17 and 18 are the same. A difference ($|Ai-Ao|$) between a stranding angle Ai of the inner sheath strand f2 and a stranding angle Ao of the outer sheath strand f3 is greater than 1° and smaller than 3°.

**FIG.3**

**Description**

Technical Field

The present invention relates to a steel cord for a tire suitable as a carcass cord and a bead-reinforcing cord, and to a pneumatic tire using the steel cord.

Background Art

In a heavy-load tire, a steel cord is frequently used in a carcass forming a tire framework and/or in a bead-reinforcing layer that reinforces a bead section to improve bead durability. As the steel cord, to obtain high tensile strength of a cord per a diameter of the cord and excellent fatigue endurance, there is widely employed a double layer-stranding structure of 3+9 and 1+6, or a triple layer-stranding structure of 3+9+15 and 1+6+12 in which strands having the same diameter are most closely or densely arranged.

However, such a densest layer stranding structure, the number of gaps between strands in a sheath is small and rubber penetrability into a cord is poor. Therefore, rust is generated in the strand due to moisture from a damaged portion of a tire generated during running, and there is a tendency that cord strength is deteriorated. Hence, it is proposed to improve the rubber penetrability in the densest layer stranding structure by thickening a core strand as compared with a sheath strand, or to improve the rubber penetrability by stranding up with sheaths while twisting the cords using a corrugation-patterning strand as the core strand, thereby bringing a pattern into a three-dimensional pattern as shown in patent document 1. See Japanese Patent Application Publication No. 2002-161487.

Disclosure of the Invention

Technical Problems to be Solved

According to the former proposal, however, it is necessary to prepare strands having different diameters and it is not economical, and if the core strand is thickened, tensile strength per area of cross section of the strand tends to be lowered, and this adversely affects weight-reduction. According to the latter proposal, since the strength is deteriorated due to the patterning processing, it is necessary to increase the number of cord-hammering times, and this also adversely affects weight-reduction.

On the other hand, steel cords of triple layer-stranding structure are frequently used in a carcass cord and/or a bead-reinforcing cord of a tire for a truck/bus and a dump truck that requires especially high strength. In the case of the triple layer-stranding structure, however, there is a problem that strands fret between inner and outer sheaths, and the strength is deteriorated by tire running.

Hence, in the steel cord of the triple layer-stranding structure, it is an object of the present invention to provide a steel cord for a tire and a pneumatic tire using the steel cord in which fretting between strands is reduced, deterioration in cord strength caused by running is suppressed, rubber penetrability is improved and tire durability can be enhanced.

Means to Solve the Problems

An invention of claim 1 provides a steel cord for a tire comprising a cord main portion of a triple layer-stranding structure including: a core formed from one core strand, an inner sheath formed from N (2 to 5) inner sheath strands stranded with a stranding pitch Pi around the core; and outer sheath formed from M (6 to 11) outer sheath strands stranded with a stranding pitch Po around the inner sheath; wherein

diameters da of the core strand, the inner sheath strand and the outer sheath strand are equal to each other, the diameter da is in a range of 0.15 to 0.25 mm,

stranding directions of the inner sheath and the outer sheath are equal to each other,

the stranding pitch Pi of the inner sheath is greater than 25 times of the diameter da and smaller than 100 times of the diameter da, and the stranding pitch Po of the outer sheath is greater than the stranding pitch Pi, greater than 42 times of the diameter da and smaller than 167 times of the diameter da,

a difference (M-N) between the number N of the inner sheath strands and the number M of the outer sheath strands is in a range of 4 to 6, and

a difference ($|Ai-Ao|$) between a stranding angle Ai of the inner sheath strand and a stranding angle Ao of the outer sheath strand is greater than 1° and smaller than 3°.

An invention of claim 2 provides a pneumatic tire wherein the steel cord for a tire according to claim 1 is used for a carcass cord or a bead-reinforcing cord.

Effect of the Invention

According to the present invention, since the core is formed of one strand, rubber penetrability failure into the core can be avoided. Since the inner sheath is formed of 2 to 5 strands and the outer sheath is formed of 6 to 11 strands, sufficient gaps can be secured between the strands in each sheath without subjecting the strand to the patterning processing although the diameters of the strands are the same, the rubber penetrability can be improved, and deterioration in cord strength caused by rust can be suppressed. Since the diameters of the strands are the same, deterioration in tensile strength caused by thickening the core strand and deterioration in strength caused by the patterning processing can be prevented.

Since the stranding directions of the inner sheath and the outer sheath are the same, contact areas of the strands between the sheaths are increased, and a contact pressure per unit area between strands can be reduced. Especially in this invention, the difference ($|Ai-Ao|$) between the stranding angle Ai of the strand of the inner sheath and the stranding angle Ao of the strand of the outer sheath is set greater than 1° and smaller than 3°. With this, the contact pressure can largely be reduced. Generation of fretting can be suppressed at a high level, the rubber penetrability is improved and the tire durability can be enhanced. Brief Description of Drawings

FIG. 1 is a cross sectional view showing an embodiment of a pneumatic tire of the present invention;
FIG. 2 is a conceptual cross sectional view of a bead-reinforcing cord;
FIG. 3 is a conceptual side view of the bead-reinforcing cord;
FIG. 4 is a conceptual cross sectional view of a carcass cord;
FIG. 5 is a conceptual side view of the carcass cord; and
FIGS. 6(A) and (B) are cross sectional views of cords in comparative examples 1A, 1B, 2A and 2B in Tables 1 and 2.

Brief Description of Numerals

| 6C | carcass cord |
|---|---|
| 9C | bead-reinforcing cord |
| 15, 21 | steel cord |
| 16 | core |
| 17 | inner sheath |
| 18 | outer sheath |
| 19 | cord main portion |
| f1 | core strand |
| f2 | inner sheath strand |
| f3 | outer sheath strand |

Best Mode for Carrying Out the Invention

An exemplary example of the present invention will be described with an illustrated example.

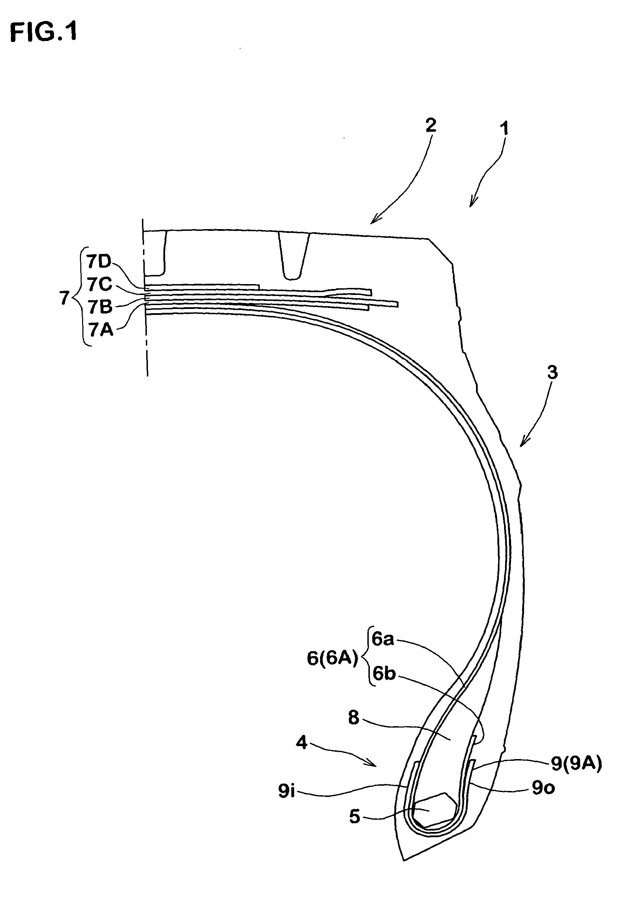

FIG. 1 is a meridian cross sectional view of a pneumatic tire using a steel cord according to the present invention. Referring to FIG. 1, a pneumatic tire 1 is a heavy-load tire for a truck and a bus. The pneumatic tire 1 includes a carcass 6 extending from a tread portion 2 through a side wall portion 3 to a bead core 5 of a bead section 4; a belt layer 7 disposed in the tread portion 2 and radially outward of the carcass 6; and a bead-reinforcing layer 9 disposed in the bead section 4.

The carcass 6 is formed from one or more, (one in this example) carcass plies 6A in which carcass cords are aligned at an angle for example of 70 to 90° relative to the circumferential direction of a tire. The carcass ply 6A is continuously provided with ply turnup portions 6b that are turned up axially outwardly from axially inward around the bead core 5 on both sides of the ply main portions 6a astride between the bead cores 5. A bead apex rubber 8 having a triangular cross section extending from the bead core 5 radially outwardly is disposed between the ply main portion 6a and the turnup portion 6b, thereby reinforcing from the bead section 4 to the side wall portion 3.

The belt layer 7 is formed from two or more (usually three or more in the case of a heavy-load tire) belt plies using the belt cord. In this example, the belt layer 7 includes four belt plies, i.e., a first belt ply 7A in which belt cords are aligned at an angle of 60±15° relative to the circumferential direction of the tire and which is located on a radially innermost side, and second to fourth belt plies 7B to 7D in which belt cords are aligned at a small angle of 10 to 35° relative to the circumferential direction of the tire. These belt plies 7A to 7D are disposed such that belt cords intersect with each other between the plies at least one location. With this, the belt rigidity is enhanced, and substantially the entire width of the tread portion 2 is strongly reinforced with hoop effect.

The bead-reinforcing layer 9 is formed from one or more (one in this example) bead-reinforcing plies 9A in which bead-reinforcing cords are aligned at an angle of 10 to 50° relative to the circumferential direction of the tire. In this example, the bead-reinforcing layer 9 has a U-shaped cross section in which an inner portion 9i rising along an axial inner side of the ply main portion 6a and an outer portion 90 rising along an axial outer side of the ply turnup portion 6b are connected to each other. In this example, the inner portion 9i and the outer portion 90 are terminated radially inwardly than the ply turnup portion 6b. The bead-reinforcing layer 9 can enhance the rigidity of the bead section 4, moderate a compression stress applied to the ply turnup portion 6b when a load is applied and a tensile stress applied to the ply main portion 6a, and enhance the bead durability.

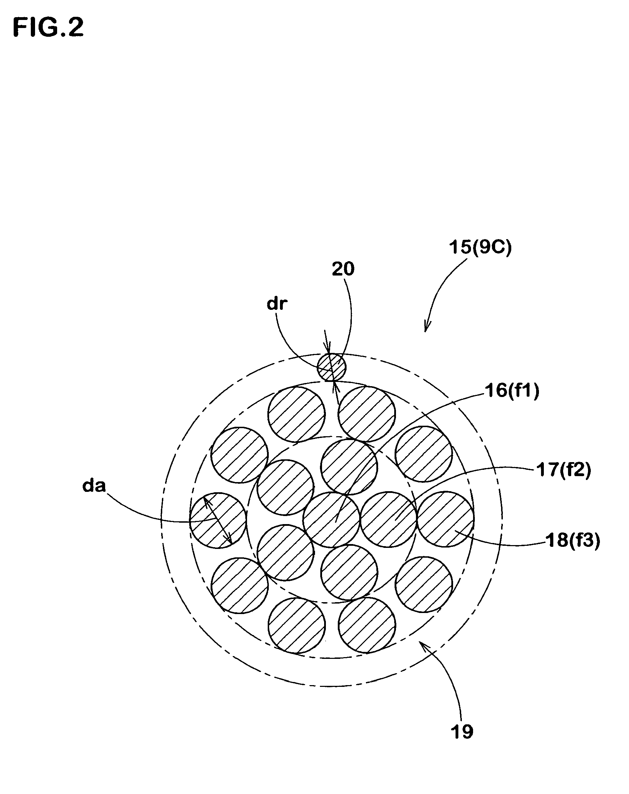

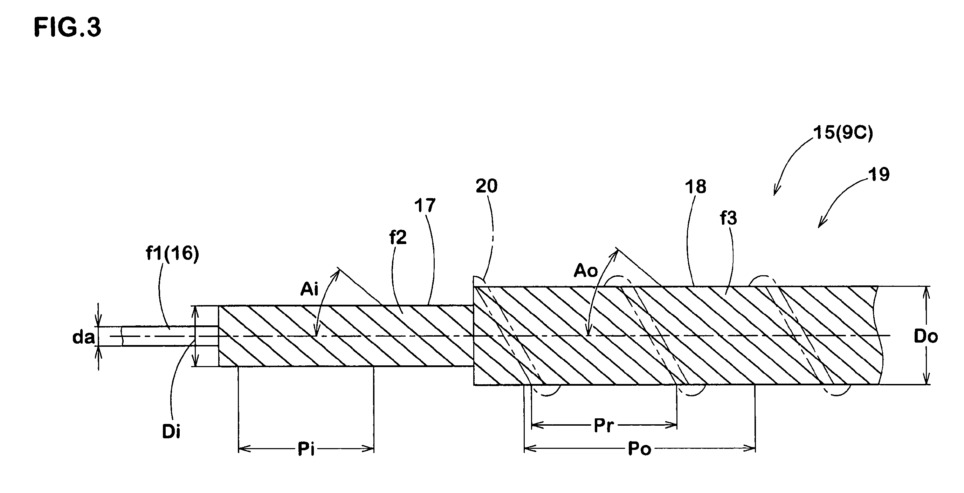

In the pneumatic tire 1 of the exemplary example, a steel cord 15 of a structure shown in FIGS. 2 and 3 is employed as a bead-reinforcing cord 9C used for the bead-reinforcing layer 9.

The steel cord 15 includes a cord main portion 19 of a triple layer-stranding structure. The cord main portion 19 includes a core 16 formed from one core strand f1, an inner sheath 17 formed from N (2 to 5) inner sheath strands f2 stranded around the core 16 with a stranding pitch Pi, and an outer sheath 18 formed from M (6 to 11) outer sheath strands f3 stranded around the inner sheath 17 with a stranding pitch Po. In this example, one wrapping wire 20 is spirally wound around an outer side of the cord main portion 19.

More specifically, diameters da of the core strand f1, the inner sheath strand f2 and the outer sheath strand f3 are equal to each other, and the diameter da is set in a range of 0.15 to 0.25 mm. The core strand f1, the inner sheath strand f2 and the outer sheath strand f3 are collectively called strands f in some cases.

If a strand f is thick, a tensile strength per area of cross section tends to reduce, and a surface distortion on an outer side of bending increases relative to large bending deformation. Therefore, diameters of the strands f are set equal to each other so that concentration of loads and distortions on partial thick strands f can be suppressed, a stress load is balanced and strong utilizing ratio is enhanced, and thus this is advantageous in terms of cord durability. It is unnecessary to prepare strands having different diameters, this is economical and the stranding operability of cord can be enhanced. If a diameter da of the strand f is less than 0.15 mm, this diameter da is too thin when the strand f is used as the carcass cord 6C or the bead-reinforcing cord 9C, cut-resistance is inferior and it becomes difficult to obtain sufficient cord strength. If the diameter da exceeds 0.25 mm on the other hand, surface distortion relative to the large bending deformation becomes large, the strand is prone to be ruptured or damaged, and durability is deteriorated.

According to the cord main portion 19, since the core 16 is formed from one strand f1, penetrability failure of rubber into the core 16 can be avoided. Since the inner sheath 17 is formed from N (2 to 5) strands f2 and the outer sheath 18 is formed from M (6 to 11) strands f3, sufficient gaps can be secured between the strands in each sheath even though the diameters of the strands f are equal to each other, the rubber penetrability is enhanced, and reduction in cord strength caused by rust can be suppressed. Further, since patterning processing on the strand is unnecessary, reduction in cord strength caused by the patterning processing can also be prevented.

At that time, it is necessary that a difference (M-N) between the number N of the inner sheath strand f2 and the number M of the outer sheath strands f3 is in a range of 4 to 6. If the difference (M-N) is less than 4, there is a problem that the gap between the outer sheath strands f3 is too wide and a shape of the cord becomes unstable. If the difference (M-N) exceeds 6 on the other hand, the gap between the outer sheath strands f3 is eliminated. To appropriately maintain the gaps between the outer sheath strands f3 and to stabilize the shape of the cord, the number N is preferably in a range of 3 to 5, and more preferably in a range of 4 to 5.

In the cord main portion 19, stranding directions of the inner sheath 17 and the outer sheath 18 are the same, the stranding pitch Pi of the inner sheath 17 is greater than 25 times of the diameter da and smaller than 100 times of the diameter da, and the stranding pitch Po of the outer sheath 18 is greater than the stranding pitch Pi, greater than 42 times of the diameter da and smaller than 167 times of the diameter da. If the stranding directions of the sheaths 17 and 18 are equal to each other, contact areas of the strands between the sheaths can be increased, and a contact pressure per unit area between the strands f can be reduced. By limiting the stranding pitches Pi and Po to the above-described ranges, there is an effect that fatigue endurance and strength of the cord can be secured. If the stranding pitch Pi is not more than 25 times of the diameter da of the strand f, there is a problem that the cord strength is deteriorated, and if the stranding pitch Pi exceeds 100 times, there is a problem that the fatigue endurance of the cord is deteriorated. If the stranding pitch Po is not more than 42 times of the diameter da of the strand f, there is a problem that the cord strength is deteriorated, and if the stranding pitch Po exceeds 167 times, there is a problem that the fatigue endurance of the cord is deteriorated.

According to the cord main portion 19 of the exemplary example, a difference (|Ai-Ao|) between a stranding angle Ai of the strand f2 of the inner sheath 17 and a stranding angle Ao of the strand f3 of the outer sheath 18 is limited to a value greater than 1° and smaller than 3°. As shown in FIG. 3, the stranding angles Ai and Ao mean tilt angles of the strands f2 and f3 relative to an axial direction of the cord, and there is the following relation between the stranding pitches Pi and Po. In the equation, Di represents a diameter of the inner sheath 17, and Do represents a diameter of the outer sheath 18.

$$\tan Ai = \pi \times \quad Di/Pi$$

$$\tan Ao = \pi \times \quad Do/Po$$

By limiting the difference (|Ai-Ao|) of the stranding angles to the above-described range, the contact pressure between the strands f2 and f3 can largely be reduced, and generation of fretting can be suppressed at a high level. If the difference (|Ai-Ao|) is 3° or greater, a sufficient fretting suppressing effect can not be expected even if the stranding directions of the sheaths 17 and 18 are the same. If the difference (|Ai-Ao|) is 1° or less, the outer sheath strand f3 drops between the inner sheath strands f2, the rubber penetrability is deteriorated, and it becomes difficult to secure stable rubber penetrability. At the portion where the outer sheath strand f3 drops, bending rigidity of the cord is locally varied, and this portion may become a starting point of a new damage.

When the steel cord 15 is used as the bead-reinforcing cord 9C, it is preferable that one wrapping wire 20 is spirally wound around an outer side of the cord main portion 19 to gather the strands f of the cord main portion 19. This is because that large bending deformation is repeatedly applied to the bead section 4 when the tire runs, and if there is no wrapping wire 20, the strands f come apart at the time of bending deformation, a local abnormal compression is input to the strands f, and the strands f buckle and this leads to a tendency in the strands to rupture before the strands are ruptured by fretting. To prevent this, in the bead-reinforcing cord 9C, the strands f of the cord main portion 19 are gathered using the wrapping wire 20. At that time, a diameter dr of the wrapping wire 20 is smaller than the diameter da of the strand f, and a winding pitch Pr thereof is set to a small value as small as 15 to 30% of the stranding pitch Po. If the winding pitch Pr is less than 15% of the stranding pitch Po, there is a tendency that the rubber penetrability is deteriorated, and if the winding pitch Pr exceeds 30%, the gathering performance of the strands f is insufficient.

The winding direction of the wrapping wire 20 is the same as the stranding directions of the sheaths 17 and 18. With this, a contact pressure between the wrapping wire 20 and the outer sheath strand f3 is reduced, and fretting to the outer sheath strand f3 is reduced.

The strand f and the wrapping wire 20 are not especially limited, but hard-drawn wire of carbon content of 0.65 to 0.88 wt% can suitably be employed.

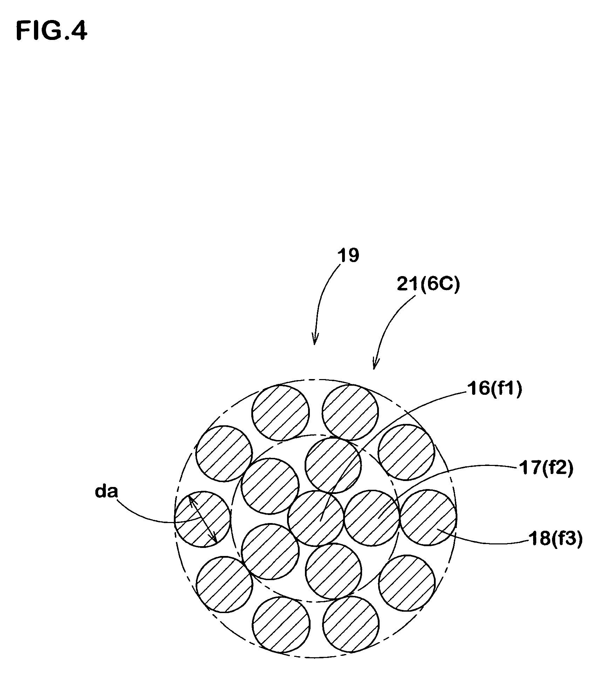

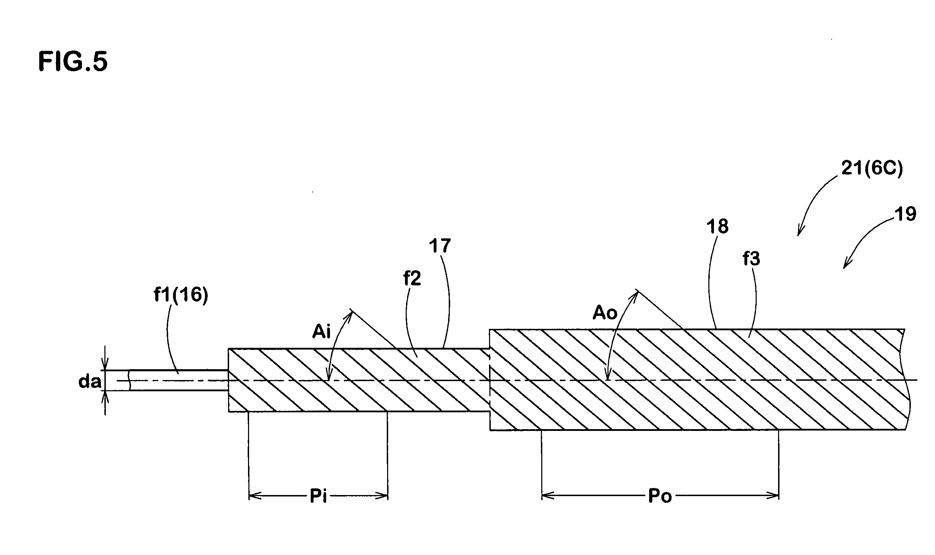

Next, in this example, a steel cord 21 having a structure shown in FIGS. 4 and 5 is employed for the carcass cord 6C. The steel cord 21 has substantially the same structure as that of the steel cord 15, and is different therefrom only in that the wrapping wire 20 is removed. That is, the steel cord 21 includes only the cord main portion 19 and thus, explanation of the steel cord 21 is omitted from the specification. In the steel cord 21, the reason why the wrapping wire 20 can be removed is that since both ends of the carcass cord 6C are locked by the bead cores 5, a tension force is always applied to the carcass cord 6C by a charged internal pressure. Therefore, in the carcass cord 6C, strands f do not come apart even when the tire is bent and deformed, and are gathered, and the wrapping wire 20 can be removed.

In the pneumatic tire 1, the steel cord 15 of the present invention can be employed for the bead-reinforcing cord 9C, and a conventional steel cord or organic fiber cord can also be employed for the carcass cord 6C. On the contrary, the conventional steel cord can be employed for the bead-reinforcing cord 9C, and the steel cord 21 of the present invention can be employed for the carcass cord 6C.

The especially preferable exemplary example of the invention has been described in detail above, the invention is not limited to the exemplary example and the invention can variously be modified and carried out.

(Embodiments)

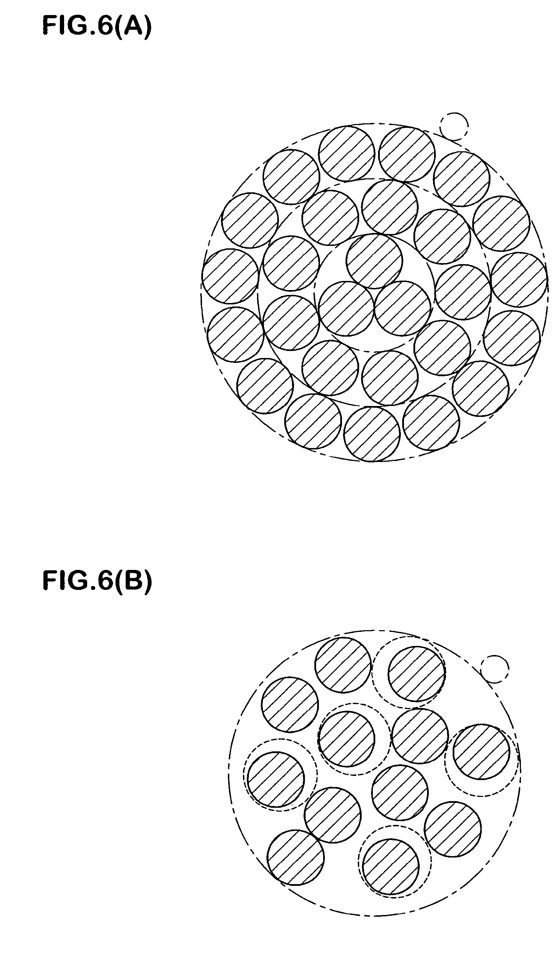

To confirm the effects of the present invention, heavy-load tires A (tire size: 11R22.5) using bead-reinforcing cords having the structure shown in FIG. 1 and specification in Table 1, and heavy-load tires B (tire size: 11R22.5) using carcass cords having specification in Table 2 were formed, and rubber penetrability, generation of rust after running and strength-retaining characteristics after running of the bead-reinforcing cord and the carcass cord were tested. Shapes of cross sections of cords of comparative examples 1A and 1B are shown in FIG. 6(A), and shapes of cross sections of cords of comparative examples 2A and 2B are shown in FIG. 6(B).

(1) Rubber penetrability:

The bead-reinforcing cords and the carcass cords were detached from the tires in a state where topping rubbers attached, rubbers were removed from the surfaces of cords having rubber as much as possible and then, the cords were disassembled. Each cord was observed over 10 cm in its length direction, and a length of a portion thereof where rubber was completely charged between the strands was measured. A ratio of the portion where rubber was completely charged to the length of 10 cm was defined as permeability of rubber. The above measurement was carried out for ten cords, and its average was defined as a measured value of the cord.

(2) Generation of rust after running:

After tires were made to run about 200,000 km, the tires were disassembled, and generation states of rust of the bead-reinforcing cords and the carcass cords were observed. Evaluations are indicated by means of indices, and as a numeric value is smaller, generation of rust is smaller and a result is more excellent.

(3) Strength retaining ratio after running:

After tires were made to run about 200,000 km, the tires were disassembled, and the bead-reinforcing cords and the carcass cords were taken out. Strengths of the cords are indicated by means of indices in which strengths of cords (cord strengths) before running are defined as 100. The greater a numeric value is, the more excellent a result is.
**[0037]** * Except wrapping wire

Table 1

| | Comparative example 1A | Comparative example 2A | Comparative example 3A | Comparative example 4A | Embodiment 2A | Embodiment 3A | Embodiment 4A | Comparative example 5A | Comparative example 6A |
|---|---|---|---|---|---|---|---|---|---|
| <Bead-reinforcing cord > | | | | | | | | | |
| · Structure of cord main portion | 3+9+15 | 1x12 | 1+5+12 | 1+5+10 | 1+5+10 | 1+4+9 | 1+2+7 | 1+5+10 | 1+5+10 |
| · Diameter da of strand <mm> | 0.175 | 0.23 | 0.23 | 0.23 | 0.23 | 0.23 | 0.23 | 0.23 | 0.23 |
| · Number N of inner sheath | 9 | 12 | 5 | 5 | 5 | 4 | 2 | 5 | 5 |
| · Number M of outer sheath | 15 | --- | 12 | 10 | 10 | 9 | 7 | 10 | 10 |
| Difference (M-N) | 6 | --- | 7 | 5 | 5 | 5 | 5 | 5 | 5 |
| ·Stranding pitch Pi <mm> | 12 | 16 | 8.6 | 9.6 | 8.6 | 8.6 | 8.6 | 8.9 | 7.7 |
| Ratio (Pi/da) | 65 | 69.5 | 37 | 42 | 37 | 37 | 37 | 38.7 | 33.5 |
| · Stranding pitch Po <mm> | 18 | ---- | 16.0 | 16.0 | 16.0 | 16.0 | 16.0 | 16.0 | 16.0 |
| Ratio (Po/da) | 103 | --- | 69 | 69 | 69 | 69 | 69 | 69 | 69 |
| ·Stranding angle Ai <°> | 12.9 | 12.5 | 14.1 | 12.7 | 14.1 | 14.1 | 14.1 | 13.7 | 15.7 |
| ·Stranding angle Ao <°> | 12.7 | --- | 12.7 | 12.7 | 12.7 | 12.7 | 12.7 | 12.7 | 12.7 |
| Difference (|Ai-Ao|) <°> | 0.2 | ---- | 1.4 | 0 | 1.4 | 1.4 | 1.4 | 1.0 | 3.0 |
| · Wrapping wire | | | | | | | | | |
| ·· Diameter dr <mm> | 0.15 | 0.15 | 0.15 | 0.15 | 0.15 | 0.15 | 0.15 | 0.15 | 0.15 |

(continued)

| | Comparative example 1A | Comparative example 2A | Comparative example 3A | Comparative example 4A | Embodiment 2A | Embodiment 3A | Embodiment 4A | Comparative example 5A | Comparative example 6A |
|---|---|---|---|---|---|---|---|---|---|
| ·· Winding pitch Pr <mm> | 3.5 | 3.5 | 3.5 | 3.5 | 3.5 | 3.5 | 3.5 | 3.5 | 3.5 |
| <Characteristics of cord> | | | | | | | | | |
| · Cord diameter <mm> | 1.38 | 1.43 | 1.45 | 1.43 | 1.45 | 1.45 | 1.45 | 1.44 | 1.45 |
| . Cord strength <N> | 1688 | 1436 | 2244 | 1994 | 1994 | 1745 | 1246 | 1994 | 1994 |
| . Cord cross sectional area* <mm2> | 0.6494 | 0.4986 | 0.7478 | 0.6647 | 0.6647 | 0.5816 | 0.4155 | 0.6647 | 0.6647 |
| · Strength per area of cross section <N/mm2> | 2600 | 2880 | 3000 | 3000 | 3000 | 3000 | 3000 | 3000 | 3000 |
| · Ends <number/ 5 cm> | 22 | 26 | 17 | 19 | 19 | 22 | 30 | 19 | 19 |
| · Cord strength ends <N> | 37146 | 37332 | 38140 | 37890 | 37890 | 38389 | 37392 | 37890 | 37890 |
| <Tire performance> | | | | | | | | | |
| · Rubber penetrability | 0 | 85 | 3 | 83 | 96 | 94 | 94 | 87 | 97 |
| · Generation of rust after running | 35 | 9 | 15 | 17 | 4 | 3 | 5 | 13 | 3 |
| Strength retention performance after running | 85 | 92 | 91 | 93 | 96 | 99 | 92 | 95 | 89 |

Table2

| | Comparative example 1B | Comparative example 2B | Comparative example 3B | Comparative example 4B | Embodiment 2B | Embodiment 3B | Embodiment 4B | Comparative example 5B | Comparative example 6B |
|---|---|---|---|---|---|---|---|---|---|
| <Carcass cord> | | | | | | | | | |
| · Structure of cord main portion | 3+9+15 | 1x12 | 1+5+12 | 1+5+10 | 1+5+10 | 1+4+9 | 1+2+7 | 1+5+10 | 1+5+10 |
| · Diameter da of strand <mm> | 0.175 | 0.23 | 0.23 | 0.23 | 0.23 | 0.23 | 0.23 | 0.23 | 0.23 |
| · Number N of inner sheath | 9 | 12 | 5 | 5 | 5 | 4 | 2 | 5 | 5 |
| · Number M of outer sheath | 15 | ---- | 12 | 10 | 10 | 9 | 7 | 10 | 10 |
| Difference (M-N) | 6 | ---- | 7 | 5 | 5 | 5 | 5 | 5 | 5 |
| · Stranding pitch Pi <mm> | 12 | 16 | 8.6 | 9.6 | 8.6 | 8.6 | 8.6 | 8.9 | 7.7 |
| Ratio (Pi/da) | 65 | 69.5 | 37 | 42 | 37 | 37 | 37 | 38.7 | 33.5 |
| · Stranding pitch Po <mm> | --- | 18 | 16.0 | 16.0 | 16.0 | 16.0 | 16.0 | 16.0 | 16.0 |
| Ratio (Po/da) | 103 | ---- | 69 | 69 | 69 | 69 | 69 | 69 | 69 |
| · Stranding angle Ai <°> | 12.9 | 12.5 | 14.1 | 12.7 | 14.1 | 14.1 | 14.1 | 13.7 | 15.7 |
| · Stranding angle Ao <°> | 12.7 | ---- | 12.7 | 12.7 | 12.7 | 12.7 | 12.7 | 12.7 | 12.0 |
| Difference (|Ai-Ao|) <°> | 0.2 | ---- | 1.4 | 0 | 1.4 | 1.4 | 1.4 | 1.0 | 3.0 |
| <Characteristics of cord> | | | | | | | | | |
| · Cord diameter <mm> | 1.08 | 1.13 | 1.15 | 1.13 | 1.15 | 1.15 | 1.15 | 1.14 | 1.15 |

(continued)

| | Comparative example 1B | Comparative example 2B | Comparative example 3B | Comparative example 4B | Embodiment 2B | Embodiment 3B | Embodiment 4B | Comparative example 5B | Comparative example 6B |
|---|---|---|---|---|---|---|---|---|---|
| · Cord strength <N> | 1688 | 1436 | 2244 | 1994 | 1994 | 1745 | 1246 | 1994 | 1994 |
| · Cord cross sectional area <mm2> | 0.6494 | 0.4986 | 0.7478 | 0.6647 | 0.6647 | 0.5816 | 0.4155 | 0.6647 | 0.6647 |
| · Strength per area of cross section <N/mm2> | 2600 | 2880 | 3000 | 3000 | 3000 | 3000 | 3000 | 3000 | 3000 |
| · Ends <number/5 cm> | 38 | 45 | 29 | 33 | 33 | 37 | 52 | 33 | 33 |
| · Cord strength ends <N> | 64161 | 64613 | 65062 | 65809 | 65809 | 64563 | 64812 | 65809 | 65809 |
| <Tire performance> | | | | | | | | | |
| · Rubber penetrability | 0 | 98 | 3 | 82 | 96 | 94 | 94 | 89 | 97 |
| · Generation of rust after running | 35 | 4 | 13 | 18 | 4 | 3 | 5 | 11 | 3 |
| · Strength retention performance after running | 85 | 91 | 92 | 91 | 97 | 98 | 89 | 93 | 86 |

**Claims**

1. A steel cord for a tire comprising:

   a cord main portion of a triple layer-stranding structure including a core formed from one core strand, an inner sheath formed from N (2 to 5) inner sheath strands stranded with a stranding pitch Pi around the core, and an outer sheath formed from M (6 to 11) outer sheath strands stranded with a stranding pitch Po around the inner sheath; wherein
   diameters da of the core strand, the inner sheath strand and the outer sheath strand are equal to each other, the diameter da is in a range of 0.15 to 0.25 mm,
   stranding directions of the inner sheath and the outer sheath are equal to each other,
   the stranding pitch Pi of the inner sheath is greater than 25 times of the diameter da and smaller than 100 times of the diameter da, and the stranding pitch Po of the outer sheath is greater than the stranding pitch Pi, greater than 42 times of the diameter da and smaller than 167 times of the diameter da,
   a difference (M-N) between the number N of the inner sheath strands and the number M of the outer sheath strands is in a range of 4 to 6, and
   a difference ($|Ai-Ao|$) between a stranding angle Ai of the inner sheath strand and a stranding angle Ao of the outer sheath strand is greater than 1° and smaller than 3°.

2. A pneumatic tire wherein the steel cord for a tire according to claim 1 is used for a carcass cord or a bead-reinforcing cord.

# FIG.1

# FIG.2

# FIG.3

**FIG.4**

# FIG.5

EP 2 236 663 A1

**FIG.6(A)**

**FIG.6(B)**

## INTERNATIONAL SEARCH REPORT

| International application No. |
|---|
| PCT/JP2008/067425 |

A.  CLASSIFICATION OF SUBJECT MATTER
*D07B1/06*(2006.01)i, *B60C9/00*(2006.01)i, *B60C15/06*(2006.01)i

According to International Patent Classification (IPC) or to both national classification and IPC

B.  FIELDS SEARCHED

Minimum documentation searched (classification system followed by classification symbols)
D07B1/06, B60C9/00, B60C15/06

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| P,X | JP 2007-314012 A  (Toyo Tire and Rubber Co., Ltd.), 06 December, 2007 (06.12.07), Claims 1, 3, 4; Par. Nos. [0038], [0051]; table 1 (Family: none) | 1 |
| A | JP 2003-519299 A  (Societe de Technologie Michelin), 17 June, 2003 (17.06.03), Claims; Par. Nos. [0049] to [0055], [0078] & US 2004/0108038 A1    & EP 1246964 A & WO 2001/049926 A1    & DE 60011141 T & CN 1415036 A | 1,2 |

☒  Further documents are listed in the continuation of Box C.          ☐  See patent family annex.

| | |
|---|---|
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 14 November, 2008 (14.11.08) | 25 November, 2008 (25.11.08) |

| Name and mailing address of the ISA/<br>Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2008/067425

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 14217/1987(Laid-open No. 145897/1988) (Bridgestone Corp.), 27 September, 1988 (27.09.88), Full text (Family: none) | 1,2 |
| A | JP 5-163686 A  (Tokyo Rope Mfg. Co., Ltd.), 29 June, 1993 (29.06.93), Full text (Family: none) | 1,2 |
| A | JP 10-280288 A  (Bridgestone Corp.), 20 October, 1998 (20.10.98), Full text (Family: none) | 1,2 |

Form PCT/ISA/210 (continuation of second sheet) (April 2007)

EP 2 236 663 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002161487 A